# EUROPEAN PATENT APPLICATION

(11) **EP 0 985 691 A1**
(43) Date of publication of application: **15.03.2000**
(21) Application number: 98117115.0
(22) Date of filing: 10.09.1998
(51) Int. Cl.: C08F 283/06, C08F 220/04, C08F 222/02, C04B 24/26

(54) **Process for preparing hydrophobically modified low foaming copolymers, hydrophobically modified low foaming copolymers and their use as cement additives**

(71) Applicant: Dow Deutschland Inc., Zweigniederlassung Stade, 21683 Stade (DE)
(72) Inventor: Eiffler, Jürgen, Dr., 21682 Stade (DE)
(74) Representative: Patentanwälte Sternagel & Fleischer

(57) **Abstract**

The present invention refers to a process for the preparation of a copolymer containing structural units derived from alpha, beta unsaturated mono- or dicarboxylic acids and their salts, half-esters of dicarboxylic acids or salts thereof, an olefin and a hydrophobic moiety, said hydrophobic moiety being incorporated into the copolymer chain; said process comprises reacting
a) at least one monomer selected from alpha, beta unsaturated mono-carboxylic acids and their salts; and alpha, beta unsaturated dicarboxylic acids, their halfesters and salts thereof;
b) at least one monomer selected from olefins; and
c) at least one hydrophobic compound free of olefinic unsaturation containing units of the formula: 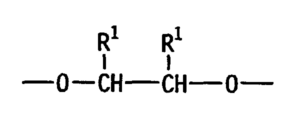 wherein R¹ is independently at each occurrence selected from hydrogen and C₁-C₄ alkyl with the proviso that at least one R¹ is selected from C₁-C₄ alkyl in an amount of 0.01 to 30 wt% based on the total amount of a), b) and c);
at a temperature in the range of 25°C-100°C, and in the presence of a free-radical initiator in an amount of 1.5wt%-25wt% based on the total weight of a), b) and c), to copolymers obtainable therefrom and the use of these polymers as cement additives.

## Description

The invention relates to novel copolymers containing structural units derived from olefins, alpha, beta unsaturated mono- or dicarboxylic acids or derivatives thereof and a hydrophobic moiety that is incorporated into the copolymer chain, as well as to a process for preparing these hydrophobically modified copolymers. These polymers are especially useful as additives in cementitious compositions to enhance their flowability and processability. According to a second aspect the present invention refers to the use of these copolymers as cement additives and to cementitious compositions comprising the copolymer of the present invention.

Surface-active dispersions are commonly used as additives in cementitious mixtures, e.g. in mortar or concrete mixtures in order to enhance their flowability and processability. Well known dispersions in the art are lignosulfonates, naphthalene- or formaldehyde-condensates. However, lignosulfonates show a non-satisfactory performance and naphthalene-formaldehyde-condensates have come under environmental pressure since they contain residual toxic amounts of free formaldehyde.

Therefore synthetic water soluble acrylate based superplasticizers have been introduced into the market. Among other they are in particular produced from styrene/(meth)acrylic acid monomers. Typical products and processes for preparation of the copolymers are disclosed in US-A 5,138,004, JP-A 62-187152 ("Cement Additives", Production and use of styrene/(meth)acrylic acid and styrene/maleic-anhydride-copolymers), GB-A-2 221 673 (Use of olefin/α,β-unsaturated dicarboxylic acid copolymers), and JP-A 84-62137 ("Low molecular weight styrene/maleic-anhydride-copolymers").

These polymers have, however, in common that they are of very hydrophilic nature due to their higher level of carboxylic acid groups in the polymer backbone. As a consequence these polymers are very surface-active and promote an air entrainment into the cement/mortar mixtures. Usually if no defoamers are added the mortar air content can add up to 15 % or more. The high air level negatively influences other properties of the hardened cement, such as its mechanical strength. Additionally defoamers which are added to reduce the air content separate from the aqueous polymer solution within a very short time usually within a couple of days only.

Therefore and because of other reasons, i.e. to enhance the performance of the synthetic polymers the copolymers have been modified.

EP-A-736553 discloses a copolymer composed of at least 3 different structural units a), b) and c). Structural unit a) is derived from an unsaturated dicarboxylic acid derivative or cyclic anhydrides and imides of these dicarboxylic acids. Preferred units are derived from maleic acid derivatives. The structural unit b) is derived from an oxyalkyleneglycol-alkenylether, preferably polyethyleneoxide-vinylether, and finally structural unit c) is derived from a monomer selected from a wide range of ethylenically unsaturated monomers. However, in general, oxyalkyleneglycol ethers are difficult to be produced and they are obtained in lower yields. Therefore these polymers are rather expensive. Furthermore they are susceptible to hydrolysis in acidic environments that may occur during preparation of the polymers

From DE-A-37 28 786 a copolymer comprising styrenic units and units derived from maleic anhydride esterified with a polyalkylene glycol is known whereby only esterification with polyethylene glycols is explicitly disclosed. The used polyethylene glycols still render the copolymer hydrophilic. In DE-OS-37 28 786 it is disclosed that these copolymers can be used due to their surface-activity as emulsifiers to improve dispersibility of cement in water. But the high surface-activity also leads to an undesired high foam level.

In EP-A-306 449 copolymers of styrene and maleic acid half-esters are disclosed. These copolymers are prepared by copolymerization of maleic anhydride and styrene, followed by esterification of the maleic anhydride units with polyalkylene glycols and subsequent neutralization with sodium hydroxide solution. Due to steric hindrance a minor portion of the maleic anhydride units remain unreacted. But according to the teaching of this references it is preferred to esterify as many malein anhydride units as possible although a 100 % conversion as envisaged by the teaching of this reference is for practical reasons not possible. The preferred polyalkylene glycol is polyethylene glycol. These copolymers are suitable as emulsifiers and increase the flowability of cementitious compositions. It is also mentioned that these copolymers show a reduced level of air entrainment in comparison to comparable copolymers with a lower molecular weight. But no data are disclosed to enable verification of this statement.

In DE-A-41 42 388 copolymers composed of random units are represented by the following formula 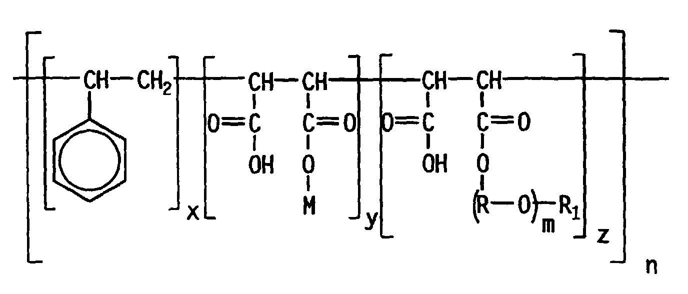
wherein M is hydrogen or the residue of a hydrophobic polyalkylene glycol, e.g. polypropylene glycol or of a polysiloxane,
R is a C₂-C₆-alkylene residue,
R₁ is a C₁-C₂₀-alkyl, C₅-C₉-cycloalkyl or a phenyl group,
x, y and z are integers of 1 to 100,
m is an integer of 1 to 100, and
n is an integer of 10 to 100,
whereby the ratio of x:(y+z) is from 10:1 to 1:10,
the ratio of y:z is from 1:5 to 1:100, and
m+n equals 15 to 100.

In a preferred embodiment R is a C₂-C₃-alkylene group. These copolymers are useful as emulsifiers and plasticizers in cementitious compositions. It is also described that these copolymers do not have the same air entraining properties as comparable copolymers without providing any data.

DE-A-44 45 569 discloses a similar copolymer for the same purpose wherein the styrene moiety is substituted by a moiety derived from an ethylenically unsaturated monomer selected from a wide range of monomers.

In the preferred embodiments of both German applications R is preferably ethylene, resulting in a hydrophilic polymer still showing high foam levels.

From WO 97/39037 random styrene-maleic anhydride copolymers are known containing in one specific embodiment hydrophobic polyalkyleneglycol and hydrophilic polyethyleneglycol residues bonded to the polymeric backbone via an ester linkage.

In EP Application No. 98100880.8 that constitutes prior art according to Article 54(3) and (4) EPC a copolymer comprising:
a) structural units derived from ethylenically unsaturated hydrocarbons;
b) structural units derived from ethylenically unsaturated monomers selected from monocarboxylic acids as well as salts and amids thereof, dicarboxylic acids as well as salts, amids and half-amids thereof and cyclic anhydrides and imids of dicarboxylic acids and mixtures thereof; and
c) structural units derived from monomers selected from esters of ethylenically unsaturated monocarboxylic acids, half-esters of ethylenically unsaturated dicarboxylic acids, allylethers and vinylethers and mixtures thereof having an substituent R linked to the oxygen atom of either the ester groups or the ether groups that is selected from:
   (i) polyalkyleneoxide groups corresponding to the formula 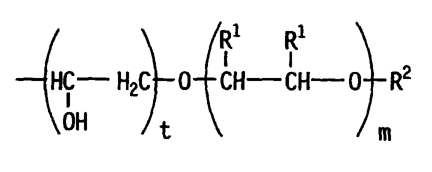 wherein R¹ is independently at each occurrence selected from hydrogen and C₁-C₄ alkyl, R² is C₁-C₄₄ hydrocarbyl, t is 0 or 1 and m is an integer in the range of 5 - 200, with the proviso that if R² is C₁-C₅ alkyl the polyalkyleneoxide group does not contain more than 50 wt. % ethyleneoxide moieties based on the weight of the polyalkyleneoxide group; and
   (ii) groups corresponding to the formula: 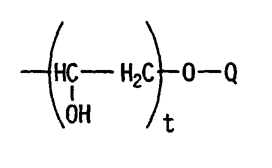 wherein t is 0 or 1 and Q is a polysiloxane residue.
   whereby the molar ratio of units b) to units c) in the copolymer is in the range of 1000:1 to 5:1, is disclosed.

The polymers described in this European patent application combine high plastization of the cementitious composition with a low air entrainment due to the incorporation of certain specified hydrophobic residue whereby already a very low level of hydrophobic residues exhibits a very high efficiency in reducing the foam level of cementitious compositions. Although these copolymers show already a considerable improvement with respect to air entrainment in cementitious compositions it was discovered that these beneficial properties may deteriorate upon storage of a dispersion containing the plasticizer for longer periods of time.

EP-A-271435 discloses a composition comprising hydraulic cement and a graft polymer plasticizer. The latter comprises a polyether backbone polymer and 2 to 30 % by weight of side chain vinyl based polymers prepared by polymerization of an ethylenically unsaturated monomer, preferably acrylic acid. The polyether is a polyalkylene oxide, preferably a hydroxyl terminated oxyethylene/oxypropylene copolymer. The polymerization is conducted in the presence of a free radical initiator and at a reaction temperature of 100 to 180°C. According to the specification of that reference the term "graft copolymer" is intended to refer to the reaction product mixture that additionally contains by-product materials like non-grafted addition homopolymers, polyether degradation products and unreacted polyether.

Although the cementitious compositions comprising this reaction product show good plastization as well as low air entrainment the process of that prior art reference as well as the products resulting therefrom have some unacceptable drawbacks. The polymers of the prior art contain a very high level of polyether between 60 and 98 % based on the weight of the graft copolymer. Additionally the product is very unspecified since it may contain different types of side-reaction products or unreacted products that may influence the properties of the reaction product that is used as plasticizers for cementitious compositions. As a consequence the beneficial properties of cement plastization at low air entrainment can only be achieved if an extremely high level of hydrophobic polyethers is used. These polyethers are very expensive raw materials. Thus the prior art product can only be produced at an unacceptably high price. Additionally the preparation process described in EP-A-271435 requires very high temperatures that may result in decomposition as mentioned in the specification, and in a more complicated process handling.

Thus the object of the present invention is to provide a new process for preparation of a plasticizer for cementitious compositions that avoids the above described drawbacks, especially with respect to process handling and economy. It is a further object of the present invention to provide a plasticizer for cementitious compositions showing improved plastization as well as low air entrainment whereby these beneficial properties are not significantly reduced upon longer storage times of the plasticizer in aqueous solution or dispersion. Additionally it is a further object of the present invention to provide a product having the above defined benefits at low production costs.

Surprisingly these different objects have been attained by a process for the preparation of a copolymer containing structural units derived from alpha, beta unsaturated mono- or dicarboxylic acids, half-esters of dicarboxylic acids or salts thereof, an olefin and a hydrophobic moiety, said hydrophobic moiety being incorporated into the copolymer chain; said process comprises reacting
a) at least one monomer selected from alpha, beta unsaturated mono-carboxylic acids and their salts; and alpha, beta unsaturated dicarboxylic acids, their halfesters and salts thereof;
b) at least one monomer selected from olefins; and
c) at least one hydrophobic compound free of olefinic unsaturation containing units of the formula: 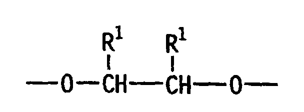 wherein R¹ is independently at each occurrence selected from hydrogen and C₁-C₄ alkyl with the proviso that at least one R¹ is selected from C₁-C₄ alkyl in an amount of 0.01 to 30 wt% based on the total amount of a), b) and c);
   at a temperature in the range of 25°C-100°C, and in the presence of a free-radical initiator in an amount of 1.5wt%-25wt% based on the total weight of a), b) and c).

According to a further aspect the present invention refers to a copolymer containing structural units derived from
a) at least one monomer selected from alpha, beta unsaturated mono-carboxylic acids and their salts; and alpha, beta unsaturated dicarboxylic acids, their halfesters and salts thereof;
b) at least one monomer selected from olefins; and
c) at least one hydrophobic compound free of olefinic unsaturation containing units of the formula: 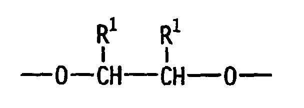 wherein R¹ is independently at each occurrence selected from hydrogen and C₁-C₄ alkyl with the proviso that at least one R¹ is selected from C₁-C₄ alkyl in an amount of 0.01 to 25 wt% based on the total amount of a), b) and c), said hydrophobic moiety being incorporated into the copolymer chain, and the use of these copolymers as plasticizer in cementitious compositions and to a cementitious composition comprising this polymer.

An essential feature of the present invention is that the hydrophobic compound containing at least one oxyalkylene unit wherein alkylene is at least propylene or a higher homologue is incorporated into the copolymer chain formed by the alpha, beta unsaturated mono-dicarboxylic acids or derivatives thereof and the olefin monomer. Incorporated into the copolymer chain means in the context of the present invention that the hydrophobic compound is copolymerized with the ethylenically unsaturated comonomers of the present invention via a radical mechanism, thus incorporating the hydrophobic moiety via a carbon/carbon bond into the copolymer chain, the above discussed structure of the copolymer of the present invention has been confirmed by ¹³C-NMR and ¹H-NMR spectroscopy.

Without wanting to be bound to theory it is believed that the hydrophobic compound is incorporated (grafted) as an end group or as a side chain into the copolymer backbone forming stable carbon/carbon linkages. It is believed that due to the high concentration of initiator a proton is abstracted from an oxyalkylene unit of the hydrophobic compound whereby oxyalkylene units having secondary C atoms like oxypropylene and higher homologue are considerably more reactive, thus forming a radical on the hydrophobic compound which then copolymerizes with the olefinic comonomer, preferably styrene. The hydrophobic compound is incorporated into an olefin sequence bearing at the end (as a reactive olefin radical) a growing chain which then of course can also react statistically with the alpha, beta ethylenically unsaturated mono- or dicarboxylic acids or derivatives thereof.

Additionally it is assumed that the alternative route of forming radicals by abstracting hydrogen from the hydroxy groups does not take place, or if it takes place it is of less importance. This can be confirmed by the fact that the above described reactions are preferably carried out in an aqueous solvent containing lower alcohol. Although the concentration of the alcohol is then considerably higher than the hydroxy-functional hydrophobic compound incorporation of the alcohol is not detected. Also the use of polyoxyalkylene glycols having two hydroxy groups as hydrophobic compound does not lead to gelation of the composition.

In contrast to most of the prior art references where hydrophobic compounds, i.e. polyoxyalkylene glycol, are incorporated into the copolymer chain via an ester linkage to an unsaturated mono- or dicarboxylic acid the hydrophobic compound of the present invention is incorporated into the molecular chain of the copolymer via stable carbon/carbon bonds. It is believed that thereby a very high stability to hydrolysis reactions, especially in basic environments is achieved. Thus the copolymers of the present invention are in contrast to plasticizers wherein the hydrophobic moiety is attached via an ester linkage to the copolymer backbone less susceptible to hydrolysis reactions and thus the beneficial properties like reduced air entrainment are maintained even after long storage times especially in a basic environment.

Additionally it was very surprising, especially in view of the teaching of EP-A-271435, that the hydrophobic compounds of the present invention can be incorporated via a radical mechanism although they are only present at a very low level compared to the teaching of EP-A-271435 wherein the polyoxyalkylene glycol is used in considerable excess, i.e. as solvent.

Thus it is a surprising effect of the present invention that a plasticizer for cementitious compositions can be provided at considerably lower costs by reducing the amount of expenses for raw material without compromising the low air entrainment whereby the plasticizers of the present invention are very stable even during a long storage period.

According to a preferred embodiment of the present invention the hydrophobic compound to be used in the polymerization process of the present invention is selected from:
c1) polyalkyleneoxide compounds corresponding to the formula: 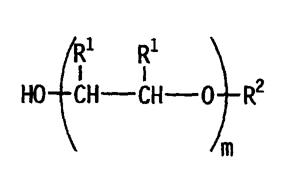 wherein R¹ is independently at each occurrence selected from hydrogen and C₁-C₄ alkyl with the proviso that if ethyleneoxide units are present, their content is less than 50 wt-% based on the total weight of the polyalkyleneoxide compound, R² is selected from hydrogen and from C₁-C₃₃ linear or branched, substituted or unsubstituted hydrocarbyls, and m is an integer selected to give a molecular weight of the polyalkyleneoxide compound in the range of 500 to 10,000, preferably 1,000 to 8,000;
c2) polyalkyleneoxide compounds corresponding to the formula: 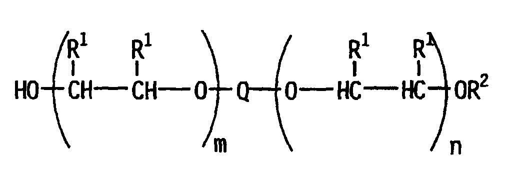 wherein R¹ is independently at each occurrence selected from hydrogen and C₁-C₄ alkyl with the proviso that if ethyleneoxide units are present, their content is less than 50 wt-% based on the total weight of the polyalkyleneoxide compound, Q is a divalent aromatic group, R² is selected from hydrogen and from C₁-C₃₃ linear or branched, substituted or unsubstituted hydrocarbyls and m and n are integers independently selected to give a molecular weight of the polyalkyleneoxide compound in the range of 500 to 10,000, preferably 1,000 to 8,000;
c3) polyalkyleneoxide compounds according to c1) or c2) additionally containing polydiorganosiloxane blocks;
c4) polyalkyleneoxide substituted alkanolamines, wherein the polyalkyleneoxide chain contains units of the formula 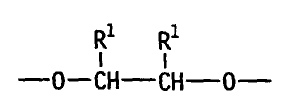 wherein R¹ is independently at each occurrence selected from hydrogen and C₁-C₄ alkyl with the proviso that at least one R¹ is selected from C₁-C₄ alkyl and at least one free hydroxyl group and at least one tertiary or secondary amine group is present; and
c5) polydiorganosiloxanes having at least one polyalkyleneoxide chain grafted thereon, wherein the polyalkyleneoxide chain contains units of the formula 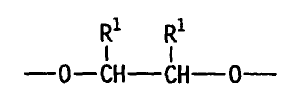 wherein R¹ is independently at each occurrence selected from hydrogen and C₁-C₄ alkyl with the proviso that at least one R¹ is selected from C₁-C₄ alkyl and at least one free hydroxyl group is present in the polydiorganosiloxane.

Preferably the hydrophobic compound does not contain ethyleneoxide units.

Particularly suitable are polyalkyleneoxide substituted alkylalkanolamines selected from alkanolamines corresponding to the formula

N(H)ₐ(CH₂CH₂OT)_{b}(CH₂CH₂O(̵A)̵T)_{3-a-b}

wherein A is a polyalkyleneoxide moiety corresponding to the formula: 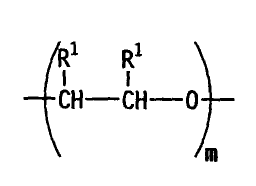 wherein R¹ is independently at each occurrence selected from hydrogen and C₁-C₄ alkyl with the proviso that if ethyleneoxide units are present, their content is less than 50 wt-% based on the total weight of the polyalkyleneoxide moiety, and m is an integer selected to give a molecular weight of the polyalkyleneoxide moiety in the range of 500 to 10,000, preferably 1,000 to 8,000.
T is independently at each occurrence selected from hydrogen and a carbonyl moiety of the formula 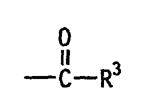 wherein R³ is selected from C₁-C₃₀ hydrocarbyl with the proviso that at least one T is hydrogen; and a and b are zero or one.

The most preferred hydrophobic compounds to be used in the process according to the present invention and incorporated into the copolymer of the present invention are selected from
(i) poly(ethyleneoxide/propylenenoxide) glycols optionally etherified at one terminal position with a C₁-C₂₄ alkyl group and containing no more than 50 wt% preferably no more than 15 wt% ethyleneoxid units based on the weight of the hydrophobic compound.
(ii) poly(propyleneoxide) glycols optionally etherified at a terminal position with a C₁-C₂₄ alkyl group,
(iii) poly(butyleneoxide) glycols optionally etherified at one terminal position with a C₁-C₂₄ alkyl group,
(iv) poly(butyleneoxide/propyleneoxide) glycols optionally etherified at one terminal position with a C₁-C₂₄ alkyl group
(v) poly(ethyleneoxide/butyleneoxide) glycols optionally etherified at one terminal position with a C₁-C₂₄ alkyl group and containing no more than 50 wt% ethyleneoxid units based on the weight of the hydrophobic compound, and
(vi) poly(ethyleneoxide/propyleneoxid/butyleneoxide) glycols optionally etherified at one terminal position with a C₁-C₂₄ alkyl group and containing no more than 50 wt% ethyleneoxid units based on the weight of the hydrophobic compound.

Preferably the hydrophobic compounds of the present invention are long-chain polyalkyleneoxide which are known to be effective as defoamers. These compounds are preferably made from propyleneoxide or butyleneoxide by initiation with an alcohol such as methanol, ethanol, butanol or higher fatty alcohol or mixtures therefore. Preferred are more hydrophobic alcohols such as butanol or higher fatty alcohols. Ethyleneoxides can also be used as a comonomer with propyleneoxide and/or butyleneoxide, however, their level is not higher than 50 wt% based on the total weight of the hydrophobic compound. Examples of the polyalkyleneoxide compounds used as hydrophobic compounds of the present invention are:

Synalox 25-50B, Synalox 25-220B, Synalox 25-300B, Synalox 50-15B, Synalox 50-30B, Synalox 50-50B, Synalox 50-100B, Synalox 50-155B, Synalox 50-300B, Terralox OH28, Terralox OH32 and Terralox OA32. These are all ethyleneoxide/propyleneoxide copolymers with a maximum content of ethyleneoxide units of 50 wt.-% based on the weight of the polyalkyleneoxide available from Dow Chemical Company.

Suitable propyleneoxide polymers for modifying the copolymer of the present invention are the commercial products Synalox 100-20B, Synalox 100-30B, Synalox 100-50B, Synalox 100-85B, Synalox 100-120B, Synalox 100-150B, DowFine 1000 and DF-141, all commercial products obtainable from Dow Chemical Company.

Examples of butyleneoxide polymers suitable to modify the copolymer of the present invention are the commercial products Synalox OA15, Synalox OA25, Synalox OA60, Synalox OA90, and Synalox OA185 available from Dow Chemical Company.

Other preferred compounds that can be used to modify the copolymer of the present invention are derivatives of polyalkyleneoxide polymers corresponding to the formula 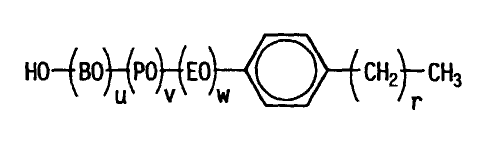 wherein EO, PO, BO represent randomly arranged ethyleneoxide, propyleneoxide and butyleneoxide units respectively, u, v, and w are integers of 0 to 50, with the proviso, that no more than 50 wt% ethyleneoxide units based on the weight of R are present and r is 0-35. These compounds are available from Dow Chemical Company under the tradename Dowfax, e.g. Dowfax D141.

These polyalkyleneoxide compounds are particularly preferred since they result in copolymers according to the present invention that if used as cement plasticizers result in the reduction of an air entrainment in cement, mortar, and concrete.

The alpha, beta unsaturated monocarboxylic acids and salts thereof to be used as component a) for preparing the copolymer of the present invention are preferably selected from acrylic acid, methacrylic acid, crotonic acid and itaconic acid. Suitable alpha, beta unsaturated carboxylic acids are selected from maleic acid and fumaric acid, as well as their half-esters and salts thereof. The olefinic component b) is preferably selected from styrene, alpha-methylstyrene, ethylene, propylene, isobutylene, diisobutylene, 1-butene, and 1-octene, whereby styrene is the most preferred olefinic component according to the present invention. Alkyl and hydroxyalkyl(meth)acrylates, vinylethers, vinylesters, acrylonitrile, acryloamide and vinylpyrrolidon can also be used.

According to the present invention the hydrophobic compound is present in an amount of 0.01 to 30 wt% in the reaction composition based on the total weight of the monomers. Correspondingly the components a) and b) according to the present invention constitute 70 to 99.99 wt% of the monomers in the reaction mixture. Preferably the amount of hydrophobic component c) is 0.5 to 20 wt%, most preferred 5 to 15 wt% based on the total weight of monomers present. The weight ratio of monomers a:b is within the range from 10:90 to 90:10, preferably from 30:70 to 70:30, and most preferably about 50:50.

The process according to the present invention is preferably performed in an aqueous solvent comprising an alcohol having a boiling point below 100°C.

The weight ratio alcohol/water is preferably 1:5 to 5:1, more preferred 1:3 to 3:1, and most preferred 1:2 to 2:1. Preferred alcohols are methanol, ethanol, propanol or isopropanol, but other low boiling alcohols may also be used. The most preferred low alcohol is isopropanol.

The hydrophobic compound is preferably added to the alcohol/water/ethylenically unsaturated monomer mixture before the polymerization is started, i.e. before the initiator is added. Also possible, but less preferred is the continuous or portionwise addition of the hydrophobic compound during the course of the polymerization either separately or in a mixture with the monomer or the initiator stream.

Initiators for the free radical polymerization reactions are preferably inorganic peroxides, like peroxodisulfates such as ammonium, sodium or potassium peroxodisulfate or hydrogen peroxide and mixtures thereof. These peroxides can also be used in combination with redox-cocatalysts such as heavy metal salts, i.e. Fe salts, sulfur compounds. i.e. NaHS, amines or hypophosphites in order to promote their decomposition rate. In particular if hydrogen peroxide is selected Fe salts are advantageously used. The use of organoperoxides such as benzoylperoxide or azoinitiators such as azoisobutyronitrile or water-soluble azoinitiators is possible but less preferred. Surprisingly it has been found that a higher level of initiator than commonly used in the case of a free radical polymerization has to be used in order to enable the grafting of polyether onto the copolymer backbone. The initiator is used at the level of from 1.5 wt% to 25 wt% based on the weight of the monomers, preferably in an amount of 2.5 to 20 wt%, most preferred 5 to 15 wt%. If coinitiators are used the initiator/coinitiator mole ratio can be from 1:10 to 10:1, preferably however, the mole ratio is 1:1. In this case the initiator level is usually somewhat lower and can be from 1 to 20 wt%, preferably from 3 to 20 wt% depending on the kind of coinitiator and the polymerization conditions such as temperature applied. Preferably no coinitiator is used except in the case of hydrogenperoxide.

Chain transfer agents in order to control the molecular weights of the graft copolymer can be present in addition, i.e. may contain such as dodecylmercaptane or allyl derivatives and the like.

The polymerization temperature is in the range of 25 to 100°C, preferably from 40 to 90°C, and most preferred in the range of 60 to 85°C. The polymerization reaction times are between 0.2 to 10 hours, preferably between 0.5 and 8 hours, most preferred from 1 to 5 hours depending on the polymerization temperature.

The low alcohol is distilled from the reaction mixture after polymerization and can be recycled. Prior to distillation the polymer can be partially or completely neutralized with diluted caustic. Instead of caustic amines such as triethanolamine or derivatives prepared from triethanolamine by conversion with propyleneethylene or -butylene oxides having one terminal amine function can be used. Ammonia solutions are less preferred. The neutralization can be conducted in such a way that caustic is added simultaneously under reflux conditions whilst removing the alcohol/water mixture either under vacuum or under normal pressure conditions. Preferred is, however, a process by which the neutralization is mainly performed after the removal of the alcohol/water mixture.

Although an alcohol/water mixture is most preferred in some cases the alcohol can be replaced by an ester or ketone such as methyl or ethyl acetate or acetone. The ester and/or ketone should preferably be miscible with water and the boiling point should be below 100°C. However, as stated, an alcohol is most preferred due to it chemical stability under the reaction process conditions applied.

The molecular weight of the grafted copolymers are in general from 1.000 to 60.000, preferably from 3.000 to 30.000, and most preferred from 5.000 to 15.000 based on the weight average molecular weight (Mw).

The copolymers of the present invention can be used as additives for cementitious compositions, especially those that are used for construction purposes as plasticizer to increase the flowability of the cementitious composition. Especially preferred is the use of the copolymers of the present invention in mortar and cement compositions.

Thus according to a further aspect the present invention refers also to a cementitious composition comprising the copolymer of the present invention. These cementitious compositions for construction purposes like mortar or cement usually comprise a hydraulic binder, aggregate and water. According to a preferred embodiment the copolymer of the present invention is present in these cementitious compositions in an amount of 0.001-2.5, preferably 0.01-0.1 percent based on the weight of the hydraulic binder. Preferably the copolymer of the present invention is added to the cementitious composition in form of an aqueous solution/dispersion (concentrate) containing the copolymer in a concentration of 5 to 50 weight percent, preferably 15 to 35 weight percent.

The cementitious composition of the present invention may contain other usual additives, for instance aluminum salts like aluminum sulfate, aluminum hydroxide or aluminum hydroxysulfate as accelerators for setting of the concrete. These and other usual additives may be either incorporated into the concentrate of the copolymer of the present invention or may be added directly to the cementitious composition.

Besides the effect or reducing the foam level in the cementitious composition the copolymers of the present invention impart additional advantageous properties to the cementitious compositions. Thus it is known that defoamers can be added to solutions of the non-modified polymers of the prior art to reduce the high foam level of these solutions. However, all known defoaming systems tested so far separate from the aqueous polymer solution in a couple of days and thus their performance is lost and the solutions exhibit the high initial foam level again. Surprisingly it has been found that if defoamers are added to the aqueous solutions/dispersions the copolymers of the present invention they do not separate even after a prolonged period of time.

The following Examples are provided to illustrate the present invention in more detail:

### Example 1:

49 grams of maleic anhydride are slowly added into a solution of 50 grams of water and 5.6 grams 50 wt% caustic. The solution is heated to 80°C and this temperature kept for one hour. Then, 100 grams of isopropanol, 10 grams of Synalox 100-150B (Dow Chemical; a polypropyleneoxideglycol prepared from propyleneoxide and butanol having a molecular weight of 2600) and 5 grams of Dowfine 1000 (Dow Chemical; a polypropyleneoxideglycol prepared from propyleneoxide and a mixture of C12-C14 aliphatic alcohols having a molecular weight of 1000) and 0.1 grams of dodecanthiol are added. The mixture is heated to 83°C. 55 grams of styrene and a solution of 16 grams of sodiumperoxodisulfate in 66 ml water is continuously but separately added over the course of one hour at 83°C. The reaction mixture is stirred for another hour at this temperature in order to allow post-polymerization. Isopropanol is evaporated and further 100 ml of water are added. The reaction mixture is allowed to cool to 55°C and thereafter is neutralized with aqueous caustic and adjusted to a pH of 7.0. After dilution with water a stable dispersion having a non-volatile content of 30% is obtained. Its Brookfield-viscosity is 60 cps (25°C).

3.1 grams of this dispersion is added to a mixture of 450 grams of ordinary Portland Cement CEM and 1350 grams of Normsand (0.2 mm) and 198 grams of water. Hence, the water/cement ratio is 0.44. An excellent plastization of the mortar mixture is observed (163 mm after 10 minutes). The mortar air content as determined in accordance with DIN EN 196 is 4.5%. the cement mixture without the 3.1 gram polymer dispersion of the invention has a flow of only 100 mm and an air content of 4.4%.

According to DIN EN 196 flowability was measured by compacting fresh mortar in the upside-down funnel of the apparatus and placed on the glass plate. The funnel was removed and the apparatus turned on. The glass plate moved 15 times up and down in a defined distance in brusque movements. The diameter of the mortar cake after the strokes was then recorded. The initial diameter was 100 mm, i.e. the larger diameter of the funnel. Final diameters above 100 mm demonstrate the mortar exhibits a certain flowability.

A portion of the 30 wt% aqueous polymer dispersion is put in an oven and left for 4 weeks at a temperature of 40°C (glass sealed sample). The dispersion remained stable and did not break. 3.1 grams of the thus aged dispersion is added into a fresh mortar/cement-mixture as described above. Its flow is still 162 mm after 10 minutes and its air level 4.5%.

### Example 2:

Example 1 is exactly repeated, however instead of a mixture of Synalox 100-150B (10 grams) and Dowfine 1000 (5 grams), only Synalox 100-150B is used in an amount of 15 grams. The polymerization is carried out as described. The aqueous solution is neutralized, adjusted to pH of 7 and diluted to a non-volatile content of 30 wt%. The Brookfield-viscosity of the stable turbid white dispersion is 50 cps at 25°C.

3.1 grams of this solution is added into a mortar mixture as described in example 1. The mortar air content measured according to DIN EN 196 is determined to be 5.4%. The flow is 170 mm. (The mortar without the addition of the dispersion has a flow of 100 mm and an air content of 4.4%).

### Example 3:

Example 1 is repeated, however a mixture of 10 grams of Synalox 100- 150B and 2.5 grams of Dowfine 1000 is used. The Brookfield-Viscosity of the neutralized stable dispersion (30 wt% non-volatiles) is 50 cps. 3.1 grams of this dispersion is added into the mortar mixture as described in example 1. The air-level of the mortar mixture is 4.7%. The flow is 164 mm after 10 minutes.

### Example 4:

Example 1 is repeated, but instead of the mixture of Synalox 100-150B and Dowfine 1000, an ethyleneoxide/propyleneoxide-glycol with an EO/PO ratio of about 1:6 and a molecular weight of about 2000 to 2500 with two functional hydroxyl-end-groups is used. The polymer dispersion obtained has a pH of 7 and is diluted to a no-volatile content of 30 wt%. 3.1 grams of this dispersion is added into a mortar mixture as described in example 1. The air level of the mortar mixture is 8.6% (flow of 195 mm after 10 minutes).

### Example 5:

Example 1 is repeated, but instead of the mixture Synalox 100-150B and Dowfine 1000, 15 grams of a propylenoxide glycol with two functional OH end-groups and a molecular weight of 3000 is used (from Aldrich). The finely divided colloidal dispersion was adjusted to a pH of 7 and diluted to a non-volatile content of 30 wt%.

3.1 grams of this dispersion is added into a mortar mixture as described in example 1. The air level of the mortar mixture is 5.1% (blank 5%) and its flow after 10 minutes is 165 mm.

### Example 6:

A blend of a grafted copolymer of the invention with sodiumlignosulfonate.
25 grams of an aqueous 30 wt%-copolymer prepared as described in example 1 is blended with an aqueous 30 wt% sodiumlignosulfonate solution. A homogeneous solution without any skin formation is obtained. 3.1 grams of this blend is added into a mortar mixture as described in example 1. Its air level is 6.2% and its flow after 10 minutes is 157 mm.

### Example 7:

Example 1 is repeated, however only 2.5 grams of Dowfine 1000 is used instead of the polyglycolether mixture, the pH is adjusted to 7 (30 wt% aqueous solution).
Mortar testing as described in example 1 resulted in an air level of 6.8% and in a flow of 165 mm (blank 5% and 100 mm) The colloidal emulsion is stable.

### Example 8:

10 grams of Synalox 100-150B is added into 49 grams of molten maleic anhydride and heated to 135°C. This temperature is kept for one hour. The solution is cooled to 65°C and 50 grams of water are slowly added. This temperature is kept for 20 minutes. Then 100 grams of isopropanol, 0.1 gram of Dodecanthiol and 2.5 grams of Dowfine 1000 are added. The mixture is heated to 83°C. A solution of 55 grams of styrene and a sodium peroxodisulfate solution is slowly and separately added over the course of one hour. The isopropanol is removed by distillation. The solution is cooled and neutralized with caustic to a pH of 7. The solution is diluted with water to 30 wt%. The mortar test resulted in an air level of 5.8% (flow of 165 ml after 10 minutes).
The solution was then put in an oven (glass sealed sample) and left for 3 months at a temperature of 40°C. The dispersion remained stable. 3.1 grams of the thus aged solution is added into a fresh mortar/cement mixture as described. The flow of the mortar is 167 mm and its air level is 6.0%.
The example shows that the performance of the copolymer prepared according to example 8 is still retained after aging at 40°C for 3 months.

### Comparative Examples

### Comparative Example 1:

Example 1 is repeated but without the addition of any polyalkyleneoxideglycol (as claimed by this invention) during the polymerization. A clear transparent aqueous polymer solution is obtained (pH of 7, diluted to 30% non-volatiles). Its Brookfield viscosity is 70 cps (25°C).
3.1 grams of this solution is added to the mortar mixture and its properties are measured as described in example 1. The air content of the mortar is 19% (flow after 10 minutes is 160 mm).

A comparison with example 1 shows that only the modified polymer according to the present invention (a hydrophobic polyalkyleneoxideglycol grafted onto the styrene/maleic acid copolymer) results in a low air entrainment in mortar.

When 1.5 wt% of Dowfine 1000 is post-added to the unmodified aqueous styrene/carboxylic salt copolymer, a mortar air content of 6.8% is obtained. But the post-added defoamer separated almost completely after 2 days standing into the upper phase. This shows that only the partial incorporation of the defoamer into the polymer backbone by a grafting reaction according to the invention results in a stable dispersion.

### Comparative Example 2:

Example 1 is repeated, however instead of Synalox 100-150B and Dowfine 1000, Dow MPEG 500 (a polyethyleneoxideglycol made from ethyleneoxide and methanol having a molecular weight of 500) (15 grams) is used and added into the monomer mixture before the polymerization. A clear transparent polymer solution is obtained. Its Brookfield viscosity is 30 cps (pH of 7, 30% non-volatiles) at 25°C.
The air content of the mortar mixture as described in example 1 is 18.3%.
A comparison with example 1 shows that an EO-based polyglycol grafted onto he polycarboxylate is not useful in order to reduce the air entrainment.

### Comparative Example 3:

Example 1 is repeated, however instead of the polyglycolether mixture 12.5 grams of a lower molecular weight silicon oil (Wacker L051) is used. A stable, turbid emulsion (dispersion) is obtained indicating that a grafting took place.
The aqueous polymer solution is diluted to 30 wt% and adjusted to a pH of 7.
The mortar test as described in example 1 resulted in an air level of 24 wt%.
The example shows that lower molecular weight silicon oils having 2 functional end groups are too hydrophilic in order to suppress the air level in mortar.

### Comparative Example 4:

Example 1 is repeated, however instead of the polyetherglycol mixture of the invention 10 grams of a higher aliphatic alcohol (decanol) is used. The solution is diluted to 30 wt% and the pH adjusted to 7.
The solution separated after 2 days standing into 2 phases with precipitates forming at the walls of the vessel.
The example shows that the use of a higher hydrophobic aliphatic polyalcohol does not result in a stable finely divided colloidal emulsion (dispersion).

### Comparative Example 5:

This example refers to polymerization of acrylic acid only (absence of styrene or an olefin) in aqueous solution in the presence of hydrophobic polyoxyalkyleneglycols.
8 grams of Synalox 100-150B and 5 grams of Dowfine 1000 are added into 200 grams of water. The dispersion is vigorously stirred and heated to 83°C.
73 grams of acrylic acid and a solution of 16 grams of sodiumperoxodisulfate dissolved in 66 ml water are added simultaneously, but separately over the course of 2 hours at 83°C. The solution is allowed to stir for further 4 hours at this temperature. Then, the reaction mixture is allowed to cool to 45°C. A solution of 85 grams of a 50 wt% caustic solution is added within 20 minutes so that the temperature did not exceed 60°C.
pH=7.0. Non-volatile content: 30.4%
After one day, the dispersion separated into 2 layers, the upper layer containing the polyoxyalkyleneglycol.

### Comparative Example 6:

Comparative example 5 was repeated using different polymerization conditions.
8 grams of Synalox 100-150B and 5 grams of Dowfine 1000 are added into 100 grams of water. The dispersion is vigorously stirred and heated to 83°C.
73 grams of acrylic acid and a solution of 16 grams of sodiumperoxodisulfate dissolved in 66 ml water are simultaneously but separately added within 1 hour at 83°C. The solution is allowed to stir for another 40 minutes until gelation occurred. 50 ml of water are additionally brought into he reactor and the solution cooled to 50°C. A solution of 75 grams of a 50 wt% caustic solution is slowly added. Then, an additional 100 ml of water. The polymer did not completely dissolve in water and larger amounts of gelled particles are present. The non-reacted polyoxyalkyleneglycol separated in an upper phase.

### Comparative Example 7:

This example refers to polymerization of acrylic acid and maleic acid (mole ratio of 1:1, no styrene nor another olefin present) in aqueous solution in the presence of a hydrophobic polyoxyalkyleneoxide.
49 grams of maleic anhydride are slowly added into a solution of 50 grams of water containing 5.6 grams of caustic. Then 0.1 gram of dodecanthiol, 8 grams of Synalox 100-150B and 5 grams of Dowfine are added. The solution is heated to 83°C.
At this temperature 36 grams of acrylic acid and a solution of 16 grams of peroxodisulfate are simultaneously but separately added during the course of 1 hour. The solution is allowed to stir for another 2 hours, cooled to 50°C. 131 grams of a 50 wt% caustic solution is added, the solution becomes deep yellow. The hydrophobic polyoxyalkyleneoxides separated directly after the synthesis into the upper phase. The lower phase consists of the transparent polymer solution which is yellow colored.

Comparative examples 5-7 show that the polyalkyleneoxideglycols could not be grafted during conditions of synthesis to the polyacrylic acid backbone, in contrast to the S/MA-copolymer (in general: an olefin/unsaturated carboxylic acid (dicarboxylic acid) copolymer of the invention. Hence the air level of a mortar/water dispersion containing the polyacrylic acid is high (higher than 15%) and could not be reduced to a level of 5% as in the case of the S/MA-copolymer of the invention. Thus it is believed that the presence of the olefinic component b) according to the present invention is essential to achieve grafting of the hydrophobic compound to the polymer backbone if the hydrophobic compound is reacted at low amounts and low temperatures.

### Comparative Example 8:

The procedure of example 8 is repeated, but Dowfine 1000 is not added during the polymerization. The solution is less turbid (pH of 7.3). The air level of the mortar mixture is 7.2% (flow of 174 mm after 10 minutes). 0.5 wt% of Dowfine 1000 is post-added into the solution. The dispersion is stable and imparts mortar an air level of 5.7% (166 ml flow). The dispersion is stored for one month at 40°C and is still stable, but it now imparted fresh mortar an air level of 7.8% (blank 4.8%).

Comparison of example 8 within its comparative example shows that the presence of the hydrophobic polyglycol during the polymerization and its grafting onto the copolymer containing a half-ester of the polyglycol results surprisingly in a product of still superior performance.

## Claims

1. Process for the preparation of a copolymer containing structural units derived from alpha, beta unsaturated mono- or dicarboxylic acids and their salts, half-esters of dicarboxylic acids or salts thereof, an olefin and a hydrophobic moiety, said hydrophobic moiety being incorporated into the copolymer chain; said process comprises reacting
a) at least one monomer selected from alpha, beta unsaturated mono-carboxylic acids and their salts; and alpha, beta unsaturated dicarboxylic acids, their halfesters and salts thereof;
b) at least one monomer selected from olefins; and
c) at least one hydrophobic compound free of olefinic unsaturation containing units of the formula: 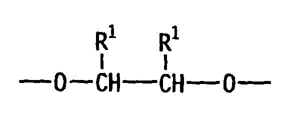 wherein R¹ is independently at each occurrence selected from hydrogen and C₁-C₄ alkyl with the proviso that at least one R¹ is selected from C₁-C₄ alkyl in an amount of 0.01 to 30 wt% based on the total amount of a), b) and c);
at a temperature in the range of 25°C-100°C, and in the presence of a free-radical initiator in an amount of 1.5wt%-25wt% based on the total weight of a), b) and c).

2. The process according to claim 1, wherein
the hydrophobic compound is selected from
c1) polyalkyleneoxide compounds corresponding to the formula: 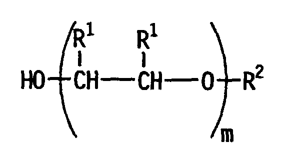 wherein R¹ is independently at each occurrence selected from hydrogen and C₁-C₄ alkyl with the proviso that if ethyleneoxide units are present, their content is less than 50 wt-% based on the total weight of the polyalkyleneoxide compound, R² is selected from hydrogen and from C₁-C₃₃ linear or branched, substituted or unsubstituted hydrocarbyls, and m is an integer selected to give a molecular weight of the polyalkyleneoxide compound in the range of 500 to 10,000;
c2) polyalkyleneoxide compounds corresponding to the formula: 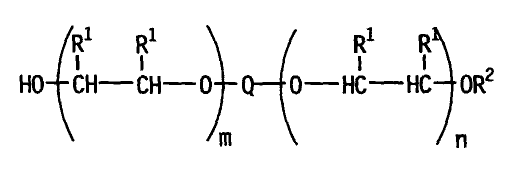 wherein R¹ is independently at each occurrence selected from hydrogen and C₁-C₄ alkyl with the proviso that if ethyleneoxide units are present, their content is less than 50 wt-% based on the total weight of the polyalkyleneoxide compound, Q is a divalent aromatic group, R² is selected from hydrogen and from C₁-C₃₃ linear or branched, substituted or unsubstituted hydrocarbyls and m and n are integers independently selected to give a molecular weight of the polyalkyleneoxide compound in the range of 500 to 10,000;
c3) polyalkyleneoxide compounds according to c1) or c2) additionally containing polydiorganosiloxane blocks;
c4) polyalkyleneoxide substituted alkanolamines, wherein the polyalkyleneoxide chain contains units of the formula 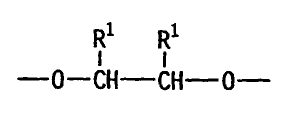 wherein R¹ is independently at each occurrence selected from hydrogen and C₁-C₄ alkyl with the proviso that at least one R¹ is selected from C₁-C₄ alkyl and at least one free hydroxyl group and at least one tertiary or secondary amine group is present; and
c5) polydiorganosiloxanes having at least one polyalkyleneoxide chain grafted thereon, wherein the polyalkyleneoxide chain contains units of the formula 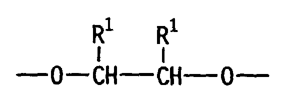 wherein R¹ is independently at each occurrence selected from hydrogen and C₁-C₄ alkyl with the proviso that at least one R¹ is selected from C₁-C₄ alkyl and at least one free hydroxyl group is present in the polydiorganosiloxane.

3. The process according to claim 2, wherein the polyalkyleneoxide substituted alkanolamines are selected from alkanolamines corresponding to the formula:
N(H)ₐ(CH₂CH₂OT)_{b}(CH₂CH₂O(̵A)̵T)_{3-a-b}
wherein A is a polyalkyleneoxide moiety corresponding to the formula: 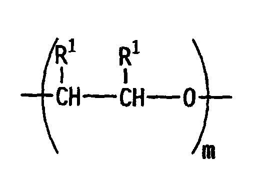 wherein R¹ is independently at each occurrence selected from hydrogen and C₁-C₄ alkyl with the proviso that if ethyleneoxide units are present, their content is less than 50 wt-% based on the total weight of the polyalkyleneoxide moiety, and in is an integer selected to give a molecular weight of the polyalkyleneoxide moiety in the range of 500 to 10,000;
T is independently at each occurrence selected from hydrogen and a carbonyl moiety of the formula 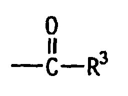 wherein R³ is selected from C₁-C₃₀ hydrocarbyl with the proviso that at least one T is hydrogen; and a and b are zero or one.

4. The process according to claim 2, wherein
the hydrophobic compound is selected from
(i) poly(ethyleneoxide/propylenenoxide) glycols optionally etherified at one terminal position with a C₁-C₂₄ alkyl group and containing no more than 50 wt% preferably no more than 15 wt% ethyleneoxid units based on the weight of the hydrophobic compound.
(ii) poly(propyleneoxide) glycols optionally etherified at a terminal position with a C₁-C₂₄ alkyl group,
(iii) poly(butyleneoxide) glycols optionally etherified at one terminal position with a C₁-C₂₄ alkyl group,
(iv) poly(butyleneoxide/propyleneoxide) glycols optionally etherified at one terminal position with a C₁-C₂₄ alkyl group
(v) poly(ethyleneoxide/butyleneoxide) glycols optionally etherified at one terminal position with a C₁-C₂₄ alkyl group and containing no more than 50 wt% ethyleneoxid units based on the weight of the hydrophobic compound, and
(vi) poly(ethyleneoxide/propyleneoxid/butyleneoxide) glycols optionally etherified at one terminal position with a C₁-C₂₄ alkyl group and containing no more than 50 wt% ethyleneoxid units based on the weight of the hydrophobic compound.

5. The process according to any of the preceding claims, wherein the alpha, beta unsaturated monocarboxylic acids are selected from: acrylic acid, methacrylic acid, crotonic acid and itaconic acid; and the alpha, beta unsaturated dicarboxylic acids are selected from maleic acid and fumaric acid.

6. The process according to any of the preceding claims, wherein the olefinic component b) is selected from styrene, alpha-methylstyrene, ethylene, propylene, isobutylene, diisobutylene, 1-butene, 1-octene, alkyl and hydroxyalkyl (meth)acrylates, vinylethers, vinylesters, acrylonitrile, acryloamides and vinylpyrrolidon.

7. The process according to any of the preceding claims, wherein the process is performed in an aqueous solvent comprising an alcohol having a boiling point below 100°C the weight ratio alcohol/water being 1:5 to 5:1, preferably 1:3 to 3:1 and most preferred 1:2 to 2:1.

8. The process according to any of the preceding claims, wherein the free-radical initiator is selected from inorganic peroxids or redox- initiators.

9. The process according to any of the preceding claims, wherein the initiator is present in an amount of 2.5 to 20 wt%, preferably 5 to 20 wt% based on the total amount of components a), b) and c).

10. A copolymer containing structural units derived from
a) at least one monomer selected from alpha, beta unsaturated mono-carboxylic acids and their salts; and alpha, beta unsaturated dicarboxylic acids, their halfesters and salts thereof;
b) at least one monomer selected from olefins; and
c) at least one hydrophobic compound free of olefinic unsaturation containing units of the formula: 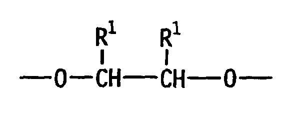 wherein R¹ is independently at each occurrence selected from hydrogen and C₁-C₄ alkyl with the proviso that at least one R¹ is selected from C₁-C₄ alkyl in an amount of 0.01 to 25 wt% based on the total amount of a), b) and c), said hydrophobic moiety being incorporated into the copolymer chain.

11. A copolymer according to claim 10, wherein the components a), b) and c) are defined according to any of the claims 2-6.

12. A copolymer containing structural units derived from alpha, beta unsaturated mono- or dicarboxylic acids, half-esters of dicarboxylic acids or salts thereof, an olefin and a hydrophobic moiety, said hydrophobic moiety being incorporated into the copolymer chain obtainable by a process according to any of the claims 1-9.

13. Use of the copolymer as defined in claims 10-12 as plasticizer in a cementitious composition especially for construction purposes.

14. A cementitious composition comprising a copolymer as defined in any of the claims 10 -12.

15. The composition of claim 14 comprising a hydraulic binder, aggregate and water.

16. The composition of claim 15 wherein the copolymer is present in an amount of 0.001-2.5, preferably 0.01-0.1 percent based on the weight of the total composition.
